Europäisches Patentamt

European Patent Office

Office européen des brevets

(19)

(11) Numéro de publication: **0 085 594**
**A1**

(12) ## DEMANDE DE BREVET EUROPEEN

(21) Numéro de dépôt: **83400101.8**

(22) Date de dépôt: **14.01.83**

(51) Int. Cl.³: **G 01 S 15/89**
**G 01 S 7/52**

(30) Priorité: **26.01.82 FR 8201201**

(43) Date de publication de la demande:
**10.08.83 Bulletin 83/32**

(84) Etats contractants désignés:
**DE GB IT NL SE**

(71) Demandeur: **THOMSON-CSF**
**173, Boulevard Haussmann**
**F-75379 Paris Cedex 08(FR)**

(72) Inventeur: **Grall, Georges**
**THOMSON-CSF SCPI 173, bld Haussmann**
**F-75379 Paris Cedex 08(FR)**

(74) Mandataire: **Wang, Pierre et al,**
**THOMSON-CSF SCPI 173, Bld Haussmann**
**F-75379 Paris Cedex 08(FR)**

(54) **Dispositif de traitement de singal pour sonar haute fréquence.**

(57) Dispositif de traitement de signaux reçus par un sonar actif à haute fréquence, qui envoie un faisceau d'ondes acoustiques oblique vers le fond de la mer.

Des voies sont formées en gisement et chaque signal de voie $S_v$ est appliqué après détection à deux intégrateurs (41, 42) l'un (41) intégrant sur le temps d'émission du signal $T_E$ et l'autre (42) intégrant sur le temps T d'ombre, produits par un objet posé au fond de la mer. Le signal de sortie S est soit le signal intégré sur $T_E$, $S_E$ soit le signal intégré sur T, $S_T$, la commutation se faisant par comparaison du signal $S_v$ avec le signal de bruit B.

Application en sonars chasse-mines classificateurs et détecteurs.

FIG.4

# DISPOSITIF DE TRAITEMENT DE SIGNAL POUR
## SONAR HAUTE FREQUENCE

La présente invention concerne un dispositif de traitement de signaux reçus par un sonar actif à haute fréquence, qui envoie un faisceau d'ondes acoustiques oblique vers le fond de la mer.

Plus spécialement ce dispositif s'applique à la détection et la classification de mines posées au fond de la mer. Ces sonars sont appelés chasse-mines.

Il est connu de monter un sonar chasse-mine sur un bateau de surface et qui produit un faisceau d'émission, dont l'ouverture en site est comprise entre quelques degrés et 20 degrés et ayant des voies angulaires préformées étroites en gisement.

La présence d'un objet sur le fond se manifeste d'une part par un signal réfléchi et d'autre part par un signal, appelé "signal d'ombre". Le signal d'ombre correspond aux distances pour lesquelles le signal de réverbération dû au fond est affaibli par suite de la présence de l'objet.

Il est connu de détecter l'objet par son écho direct dans les sonars dits détecteurs de mines, ou par son ombre dans les sonars dits classificateurs, qui ont une résolution supérieure à celle des sonars détecteurs.

Suivant l'art antérieur le traitement des signaux de voie consiste à extraire l'écho de la réverbération. Pour cela, on réalise de manière connue un traitement de filtrage-détection-intégration sur chaque signal de voie. Le signal est filtré dans une bande de fréquence tenant compte de la bande du signal émis et du déplacement de fréquence par effet Doppler. Après détection, le signal est intégré sur la durée $T_E$ de l'émission. Cette intégration constitue un filtrage passe-bas dont la bande est voisine de $1/T_E$.

Avec cette intégration sur la durée $T_E$ suivant l'art antérieur, la portée est limitée par le rapport signal d'écho direct ou d'ombre sur le bruit dû aux fluctuations du signal de réverbération.

La présente invention permet notamment d'augmenter la portée par augmentation de la durée d'intégration.

Brièvement c'est un dispositif de traitement de signaux reçus par un sonar actif haute fréquence envoyant un faisceau oblique large en site vers le fond de la mer, le dispositif comprenant une formation de voies angulaires en gisement, chaque signal de voie étant détecté et intégré sur le temps $T_E$ de la durée d'émission et appliqué à un dispositif d'utilisation pour la détection ou la classification d'objets sur le fond, caractérisé par le fait que chaque signal de voie détecté est également appliqué à un intégrateur sur la durée T de l'ombre de l'objet qui est fonction de la profondeur de la mer H de la hauteur de l'objet h et de la distance de l'objet d.

D'autres caractéristiques et avantages ressortiront de la description, qui va suivre illustrée par les figures qui représentent :

- figure 1 - une vue schématique d'un sonar envoyant un faisceau oblique vers le fond de la mer,

- figure 2 - le diagramme en gisement d'une voie angulaire ;

- figure 3 - la variation temporelle d'un signal de voie en présence d'un objet sur le fond ;

- figure 4 - un schéma du traitement pour un sonar classificateur, suivant l'invention;

- figure 5 - un schéma de traitement pour un sonar détecteur, suivant l'invention.

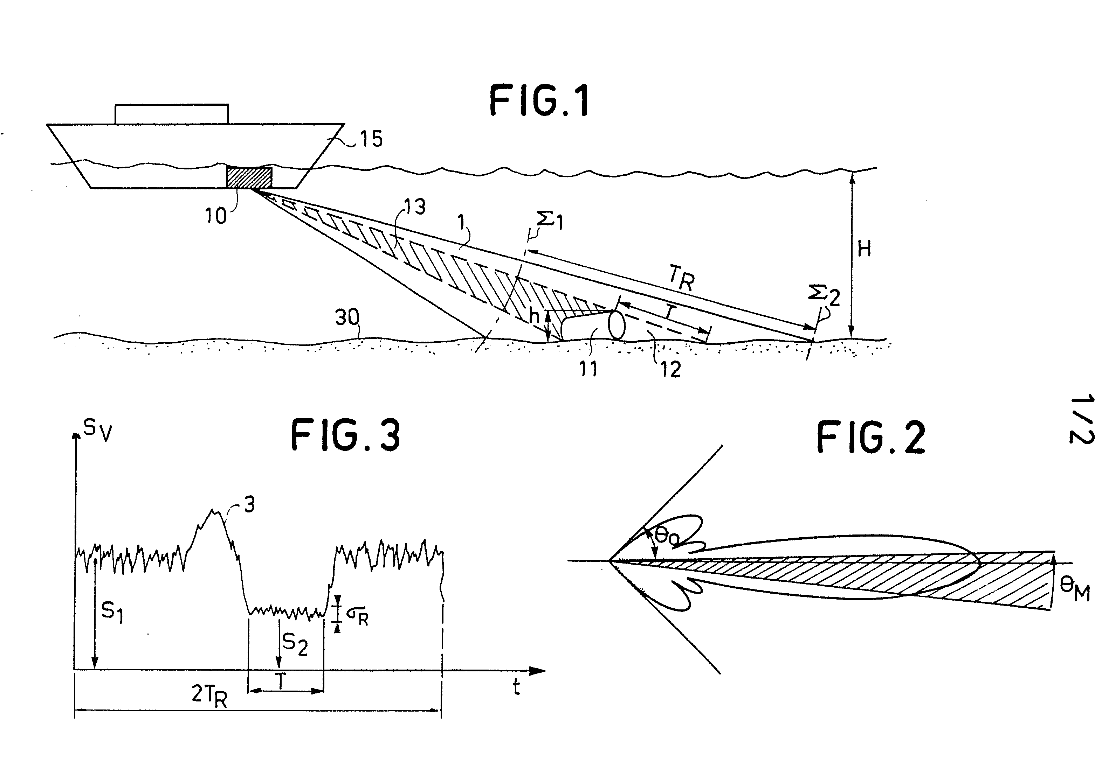

La figure 1 représente schématiquement dans le plan vertical la configuration d'un sonar chasse-mine. Le sonar 10 est monté sur un bateau de surface 15. De manière connue, ce sonar comporte une antenne d'émission et de réception, le signal émis insonifiant le fond de la mer suivant un faisceau oblique 1 dont l'angle d'inclinaison moyen est fonction de la hauteur d'eau pour une portée donnée. Cet angle est généralement compris entre quelques degrés et une vingtaine de degrés. Le signal reçu est traité pour former des voies angulaires, chaque signal de voie correspondant à un faisceau étroit dans un plan perpendiculaire au plan vertical, c'est à dire en gisement.

En présence d'un objet 11, posé sur le fond, dont les dimensions sont grandes devant la longueur d'onde du signal émis, chaque signal de voie est caractérisé par trois composantes : l'écho, l'ombre et la réverbération.

On a représenté sur la figure 1 les fronts d'onde extrêmes $\Sigma_1$ et $\Sigma_2$, qui sont séparés d'un temps $T_R$ de sorte que l'onde $\Sigma_2$ est reçue avec un retard $T_R$ par rapport à l'onde $\Sigma_1$.

La figure 2 montre le diagramme de réception d'une des voies préformées, dans le secteur angulaire $2\theta_o$ en gisement. Sur la figure on a hachuré un secteur angulaire de largeur $\theta_M$, correspondant à un objet.

La figure 3 représente un signal de voie $S_V$ en fonction du temps t pendant la durée de réception $2T_R$, la voie étant pointée sur l'objet 11. Le niveau moyen du signal de voie est régulé par un amplificateur à gain variable dans le temps, pour compenser les pertes de propagation.

En se reportant à la figure 1, le signal d'écho 3 correspond à l'énergie acoustique renvoyée par l'objet 11 dans le faisceau 13. Au signal $S_2$ correspond la zone d'ombre 12 et sa durée est T. Pendant cette durée, aucun signal n'est renvoyé par l'objet 11 et son niveau moyen $S_2$ est plus faible que le niveau moyen $S_1$ du signal de réverbération constitué essentiellement de l'écho diffus renvoyé par le fond 30.

Suivant l'invention, après détection des signaux, l'intégration se fait sur le temps du signal d'ombre $S_2$. Sur la figure on a représenté la variance $\sigma_R$ du signal $S_2$ due aux fluctuations du signal provenant du signal de fond non intercepté par l'objet 11. Le contraste C de l'ombre avant intégration est donné par la relation

$$C = (S_1 - S_2)/\sigma_R \qquad (1)$$

Si d est la distance à la cible, H la hauteur d'eau et h la hauteur de la cible, la durée de l'ombre T est donnée par la relation :

$$T = \frac{2hd}{Hc} \qquad (2)$$

où c est la vitesse du son dans l'eau. L'intégration pendant le temps T est obtenue par un filtre passe-bas dont la fréquence de coupure est $f_c$.

On prend généralement : $f_c = 3/4T$, $\qquad (3)$

où T est donné par la relation (2)

Une première réalisation, suivant l'invention concerne les sonars appelés classificateurs, qui ont une résolution suffisante pour reconnaître les objets placés au fond de la mer, tels que des mines.

Les classificateurs suivant l'art antérieur reconnaissent les objets par l'ombre avec une intégration de durée $T_E$. Leur portée $d_m$ est limitée quand le contraste de l'ombre devient insuffisant. Le fait d'intégrer pendant la durée T correspondant à la distance $d_m$ permet d'augmenter cette portée.

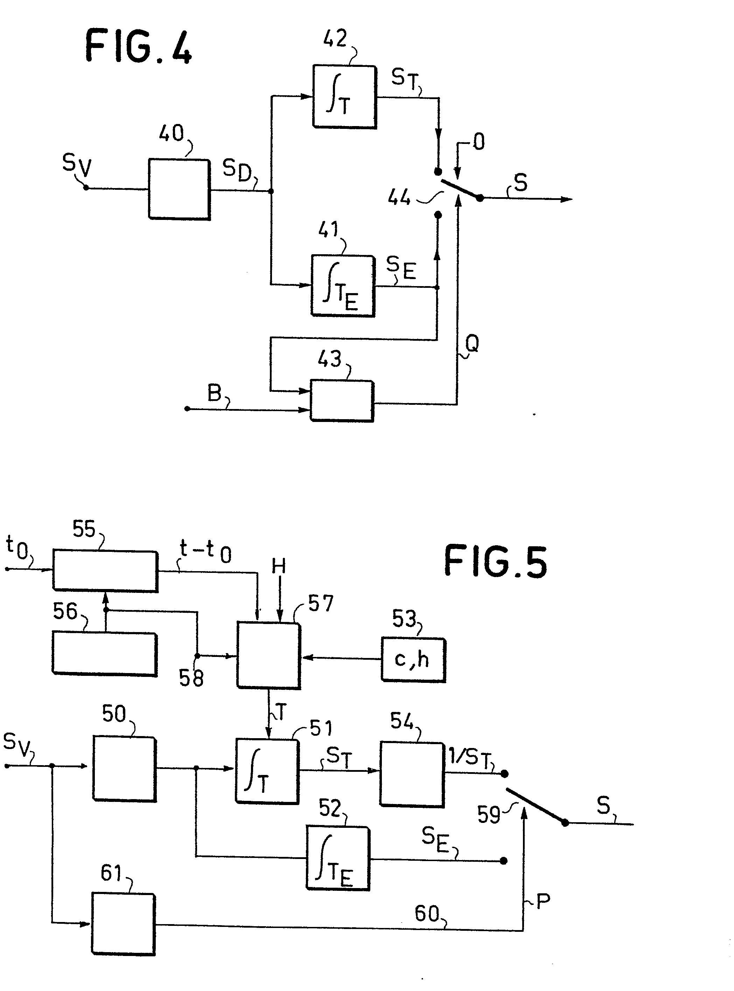

Un schéma de traitement d'un sonar classificateur suivant l'invention, est montré par la figure 4. Le signal de voie $S_V$ est appliqué à un circuit de détection 40. Le signal détecté $S_D$ est appliqué simultanément à deux circuits intégrateur, le premier intégrateur 41 correspond au temps d'intégration $T_E$ et le second intégrateur 42 correspond au temps d'intégration T, le temps T est la durée d'ombre pour une distance prédéterminée d, une hauteur d'eau H et une hauteur d'objet h, suivant la relation (2). La valeur de d choisie est voisine de la portée $d_m$

Le niveau du bruit B seul, c'est à dire de la réverbération sans la présence d'un objet est mémorisé et appliqué à un comparateur 43, qui reçoit également le signal intégré sur le temps $T_E$, $S_E$.

Le comparateur 43 commute le connecteur 44 par un signal Q. Ainsi le signal vidéo S est le signal $S_T$, quand $S_E$ est inférieur à B et le signal $S_E$, quand $S_E$ est supérieur à B. La comparaison peut également être faite par l'opérateur O, qui décide de la commutation, par évaluation visuelle du contraste.

Une deuxième utilisation, suivant l'invention concerne les sonars appelés détecteurs qui ont pour fonction de localiser les objets du fond de la mer. Les signaux utiles sont généralement les échos dus aux objets, et suivant l'art antérieur ces sonars ne travaillent pas sur l'ombre. Suivant l'invention la chaîne de traitement d'un sonar détecteur comporte un intégrateur sur ombre à temps d'intégration T variable.

La valeur de T est calculée en fonction du temps, suivant la relation (2), la distance d varie avec le temps.

La figure 5 représente le schéma d'organisation de la chaîne de traitement. Chaque signal de voie $S_V$ du sonar après détection par le détecteur 50 est envoyé d'une part dans la chaîne de traitement classique 52 et d'autre part dans la chaîne de traitement selon l'invention, composée de l'intégrateur adapté à l'ombre 51 et d'un circuit d'interface 54 permettant de présenter les signaux d'ombres en signaux d'échos.

La valeur de T est fournie par un circuit de calcul 57 soit sous forme numérique, soit sous forme analogique. Ce circuit met en oeuvre le calcul de T suivant la relation (1). Il reçoit la valeur de la hauteur d'eau H, fournie en permanence par le système, et les valeurs de la vitesse du son c et de la hauteur connue h de l'objet recherché stockées dans une mémoire 53. La distance d est obtenue à partir de la relation $d = c\,(t-t_o)/2$, où $(t-t_o)$ est le temps écoulé depuis le début de l'émission, $(t-t_o)$ est fourni par le compteur 55 qui compte les périodes du signal haute fréquence d'une horloge 56 le comptage étant initialisé par des impulsions synchrones des instants d'émission du sonar. L'horloge 56 élabore également un signal 58 synchronisant le fonctionnement du circuit de calcul.

Le circuit de présentation des ombres en échos 54 a une loi de variation de la tension de sortie $V_s$ en fonction de la tension d'entrée $V_e$ telle que $V_s = \dfrac{1}{V_e}$ .

La commutation par un signal P d'une chaîne de traitement à l'autre par le commutateur 59 est effectuée par l'opérateur, qui juge du rapport écho sur réverbération ou automatiquement si l'on dispose d'un appareil 61 capable d'évaluer le rapport écho-réverbération à toutes distances.

Suivant un exemple de réalisation de l'invention, on a les données suivantes pour un sonar classificateur :

- H = Hauteur d'eau = 30m
- h = Hauteur de l'objet = 1m
- Durée de l'impulsion émise $T_E$ = 0,2msec
- Détection quadratique
- Limite de portée pour une intégration de durée $T_E$ : $d_m$ = 250m
- Durée de l'ombre à la distance $d_m$ : $T = 2h\,d_m/(Hc) = 11,1$ msec
- Fréquence de coupure de filtre $f_c$ = 67,5 Hz
- Nature du filtre, type Butterworth 4° ordre
- Gain de traitement = $G_{dB}$ = 5 log $(T/T_E)$ = 8,7 dB.

## REVENDICATIONS

1. Dispositif de traitement de signaux reçus par un sonar actif 10 haute fréquence envoyant un faisceau oblique large en site vers le fond de la mer, le dispositif comprenant une formation de voies angulaires en gisement, chaque signal de voie étant détecté et intégré sur le temps $T_E$ de la durée d'émission et appliqué à un dispositif d'utilisation pour la détection ou la classification d'objets (11) sur le fond (3), caractérisé par le fait que chaque signal de voie détecté est également appliqué à un intégrateur (42) sur la durée T de l'ombre de l'objet qui est fonction de la profondeur de la mer H de la hauteur de l'objet h et de la distance de l'objet d,

2. Dispositif de traitement suivant la revendication 1 caractérisé par le fait que le temps T est tel que $T = 2hd_m/Hc$ où $d_m$ est une valeur prédéterminée de d, et c la vitesse du son dans l'eau.

3. Dispositif de traitement suivant la revendication 2 caractérisé par le fait que le signal de voie $S_v$ est détecté par le détecteur (40) et que le signal détecté $S_D$ est intégré simultanément sur les temps $T_E$ et T par deux intégrateurs (41,42) fournissant les signaux $S_E$ et $S_T$, un circuit de comparaison (43), compare le signal $S_E$ avec un signal mémorisé du niveau de bruit B et fournit le signal Q de commande à un commutateur (44), dont le signal de sortie est soit $S_E$, soit $S_T$ suivant que $S_E$ est respectivement supérieur ou inférieur à B, Q pouvant par ailleurs être fourni directement par l'opérateur.

4. Dispositif de traitement suivant la revendication 1 caractérisé par le fait que le temps T est variable dans le temps et égal à $h(t-t_o)/Hc$, où t correspond au temps du signal de voie $S_V$ et $t_o$ au temps origine de l'impulsion émise.

5. Dispositif de traitement suivant la revendication 4 caractérisé par le fait que le signal de voie $S_V$ détecté est appliqué simultanément aux deux intégrateurs (51,52) fournissant les signaux $S_T$ et $S_E$ correspondant aux temps d'intégration T et $T_E$, qu'un circuit de calcul (57) reçoit d'un compteur le temps $t-t_o$, le circuit de calcul recevant par ailleurs les valeurs de H, c et h et fournissant la valeur de T à l'intégrateur de temps T (51), que le signal $S_T$ est appliqué à un circuit (54) de présentation d'ombre en écho fournissant le signal $1/S_T$ le dispositif comportant en outre un circuit de commutation (59) pour commuter sur la sortie S soit le signal $S_E$ soit le signal $1/S_T$, le signal de commutation P étant commandé par un circuit de calcul (61) ou par l'opérateur

6. Dispositif de traitement suivant la revendication 1 caractérisé par le fait que le circuit d'intégration de temps T est un filtre passe-bas de Butterworth du 4° ordre dont la fréquence de coupure est égale à 3/4T.

# FIG.1

# FIG.3

# FIG.2

0085594

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-4 025 919 (L.D.JEFFERIES et al.) *Figures 1-8; colonne 1, ligne 6 - colonne 7, ligne 32* | 1-5 | G 01 S 15/89 G 01 S 7/52 |
| X | US-A-4 030 096 (W.E.STEVENS et al.) *Figures 1-7,10; colonne 1, ligne 6 - colonne 5, ligne 22; colonne 6, figures 10-58* | 1-5 | |

DOMAINES TECHNIQUES RECHERCHES (Int. Cl. 3)

G 01 S

Le présent rapport de recherche a été établi pour toutes les revendications

| Lieu de la recherche LA HAYE | Date d'achèvement de la recherche 27-04-1983 | Examinateur CANNARD J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82